# EUROPÄISCHE PATENTSCHRIFT

(11) **EP 1 213 816 B1**
(45) Veröffentlichungstag und Bekanntmachung des Hinweises auf die Patenterteilung: **30.04.2008**
(21) Anmeldenummer: 01128937.8
(22) Anmeldetag: 05.12.2001
(51) Int. Cl.: H02J 7/00

(54) **Entladeschutzvorrichtung**
Discharge protection device
Dispositif de protection de décharge

(30) Priorität: 07.12.2000 DE 10060873
(43) Veröffentlichungstag der Anmeldung: 12.06.2002
(73) Patentinhaber: Delphi Technologies, Inc., Troy, MI 48007 (US)
(72) Erfinder: Noll, Diethelm, 57589 Birkenbeul (DE); Müller, Axel, 93055 Regensburg (DE)
(74) Vertreter: Manitz, Finsterwald & Partner GbR

(56) Entgegenhaltungen:
- DE-A1- 3 742 312
- US-A- 4 218 717

## Beschreibung

Die Erfindung betrifft eine Entladeschutzvorrichtung für Batterien, insbesondere Kraftfahrzeugbatterien, die in einem Normalzustand mit wenigstens einem Geräteanschluss elektrisch verbunden sind, mit wenigstens einem Schaltorgan zwischen der Batterie und dem Geräteanschluss, das zur Unterbrechung einer in dem Normalzustand bestehenden elektrischen Verbindung zwischen der Batterie und dem Geräteanschluß durch ein Schaltsignal in einen Trennzustand überführbar ist, und mit einem Steuerorgan zur Erzeugung des Schaltsignals.

Eine Entladeschutzvorrichtung dieser Art ist aus der DE 37 42 312 A1 bekannt.

Insbesondere bei der Herstellung von Kraftfahrzeugen wird zunehmend dazu übergegangen, elektrische Anschlüsse vorzusehen, an die externe Geräte wie beispielsweise Staubsauger, Mobiltelefone und Kühlgeräte angeschlossen werden können. Wenn diese Geräteanschlüsse mit der Fahrzeugbatterie verbunden sind, ist bei ausgeschaltetem Motor, d.h. wenn die Batterie nicht geladen wird, problematisch, daß durch den Betrieb eines an den Geräteanschluß angeschlossenen Verbrauchers die Batterie soweit entladen werden kann, daß das Fahrzeug nicht mehr mittels der Batterie gestartet werden kann.

Es ist beispielsweise aus der DE 37 42 312 A1 bekannt, diesem Problem dadurch zu begegnen, daß ein bistabiles Kipprelais vorgesehen wird, mit dem das Bordnetz von der Batterie abgetrennt werden kann, sobald die Batteriespannung einen einstellbaren Grenzwert unterschreitet. Nachteilig an dieser Lösung sind das vergleichsweise hohe Gewicht, der relativ große Platzbedarf und die hohen Kosten derartiger bistabiler Relais.

Es ist das der Erfindung zugrundeliegende Problem (Aufgabe), eine Entladeschutzvorrichtung der eingangs genannten Art zu schaffen, die bei zuverlässiger Funktionsweise möglichst einfach und kostengünstig sowie mit niedrigem Gewicht und geringem Platzbedarf realisiert werden kann, und bei der außerdem im Trennzustand der Stromverbrauch minimal ist.

Bei einer aus der US-A-4 218 717 bekannten Entladeschutzvorrichtung der eingangs genannten Art wird bei ausgeschalteter Zündung des betreffenden Kraftfahrzeuges der Entladestrom der Fahrzeugbatterie daraufhin überwacht, ob er einen vorgebbaren Grenzwert überschreitet. Ist dies der Fall, so wird über ein normales Relais die Batterie von allen eventuell noch angeschlossenen Verbrauchern getrennt.

Die Lösung dieser Aufgabe erfolgt durch die kennzeichnenden Merkmale des Anspruchs 1 und insbesondere dadurch, daß das Steuerorgan das Schaltsignal bei Erreichen oder Unterschreiten einer vorgebbaren Mindestspannung der Batterie erzeugt, dass als Schaltorgan ein zum Aufrechterhalten des Trennzustands mit einem Haltesignal dauerbeaufschlagtes Relais vorgesehen ist und dass das Haltesignal und das Relais derart aufeinander abgestimmt sind, dass das Relais bezogen auf die Signalhöhe des Haltesignals zumindest im zeitlichen Mittel überdimensioniert ist.

Die Erfindung gestattet die Verwendung eines handelsüblichen Relais, das gezielt in Abhängigkeit von den jeweiligen Anforderungen aus einer Vielzahl von unterschiedliche Kenndaten aufweisenden Standard-Relaisbauteilen ausgewählt werden kann. Hierdurch lassen sich Kosten, Gewicht und Platzbedarf der das Relais umfassenden elektrischen Steuereinheit minimieren. Insbesondere gestattet die Erfindung die Verwendung eines monostabilen Relais, zu dessen Erregung und somit zur Aufrechterhaltung des Trennzustands zwar ein permanentes Haltesignal erforderlich ist, wobei jedoch durch die kleine Signalhöhe des Haltesignals der Stromverbrauch des Relais minimiert ist. Erfindungsgemäß wird somit trotz Verwendung eines herkömmlichen, im Trennzustand Strom ziehenden Relais eine kritische Entladung der Batterie vermieden. Die Erfindung nutzt den Umstand aus, daß die zur Aufrechterhaltung des Trennzustands des Relais erforderliche Haltespannung niedriger ist als die zur Herstellung des Trennzustands benötigte Schaltspannung. Erfindungsgemäß können das Haltesignal und das Relais somit derart aufeinander abgestimmt werden, daß die Signalhöhe oder die mittlere Signalhöhe des Haltesignals einerseits ausreicht, um den Trennzustand aufrechtzuerhalten, und andererseits nicht unnötig groß ist, so daß bei angelegtem Haltesignal nicht unnötig Strom verbraucht wird.

In einem besonders bevorzugten Ausführungsbeispiel der Erfindung ist vorgesehen, daß das Relais bezogen auf die nominelle Arbeitsspannung der Batterie oder eines die Batterie enthaltenden elektrischen Netzes überdimensioniert ist.

Auf diese Weise wird erreicht, daß beim Aufrechterhalten des Trennzustands des Relais ein niedrigerer Strom fließt als es bei einem Relais der Fall wäre, das normal dimensioniert, d.h. für die nominelle Arbeitsspannung ausgelegt ist.

In einer bevorzugten praktischen Ausgestaltung der Erfindung ist vorgesehen, daß das Relais, insbesondere eine Spule des Relais, einen höheren elektrischen Widerstand aufweist als ein für die nominelle Arbeitsspannung ausgelegtes Relais.

Durch den erfindungsgemäß gezielt überdimensionierten Spulenwiderstand des Relais wird dessen Stromverbrauch reduziert. Folglich kann durch geeignete Überdimensionierung des Relais dessen Stromverbrauch soweit minimiert werden, daß es trotz permanent angelegten Haltesignals zu keiner schädlichen Tiefentladung der Batterie kommt.

Gemäß einem weiteren bevorzugten Ausführungsbeispiel der Erfindung ist vorgesehen, daß zur Verstärkung des von dem Steuerorgan erzeugten Schaltsignals dem Relais eine Verstärkereinheit vorgeschaltet ist.

Mit der Verstärkereinheit kann das von dem Steuerorgan erzeugte Schaltsignal soweit verstärkt werden, daß es zum Überführen des Relais in den Trennzustand ausreicht. Von Vorteil ist, daß die Verstärkereinheit lediglich kurzfristig während des Schaltvorgangs aktiv zu sein braucht, da nach Herstellung des Trennzustands das Haltesignal ausreicht, um den Trennzustand aufrechtzuerhalten.

In einem bevorzugten Anwendungsbeispiel für die Erfindung ist vorgesehen, daß bei einer nominellen Arbeitsspannung von etwa 12 Volt das Relais und insbesondere eine Spule des Relais für eine nominelle Arbeitsspannung von etwa 24 Volt ausgelegt ist. Durch die Verwendung einer 24 V-Spule anstelle einer 12 V-Spule kann erfindungsgemäß eine Reduzierung des Stromverbrauchs des Relais erreicht werden.

Des weiteren ist gemäß einer bevorzugten Ausführungsform der Erfindung vorgesehen, daß zur Aufhebung des Trennzustands des Relais eine automatische Rückstelleinrichtung vorgesehen ist, die vorzugsweise zur Kommunikation mit dem Steuerorgan ausgebildet ist.

Dabei kann die Rückstelleinrichtung so ausgebildet sein, daß sie zur Übermittlung eines Rückstellsignals an das Steuerorgan in Abhängigkeit von vorgebbaren Bedingungen am Geräteanschluß ausgebildet ist.

In einer bevorzugten praktischen Ausgestaltung der Erfindung wird die Rückstelleinrichtung von zumindest einem elektrischen Widerstand gebildet, der parallel zum Relais zwischen die Batterie und den Geräteanschluß geschaltet ist.

Auf diese Weise kann mit minimalem Aufwand sichergestellt werden, daß auf im Anschluß an die Errichtung des Trennzustands auftretende Veränderungen automatisch reagiert und der Trennzustand wieder aufgehoben wird. Insbesondere ist es hierdurch möglich, die Unterbrechung der elektrischen Verbindung zwischen dem Geräteanschluß und einem Verbraucher zu detektieren und daraufhin den Trennzustand des Relais wieder aufzuheben. Auf diese Weise wird eine intelligente Entladeschutzvorrichtung geschaffen, die z.B. dann, wenn aufgrund eines nicht mehr mit dem Geräteanschluß verbundenen Verbrauchers die Gefahr einer kritischen Entladung der Batterie nicht mehr besteht, den nicht mehr erforderlichen Trennzustand des Relais aufhebt und somit auch den Stromverbrauch durch das Relais selbst beendet. Des weiteren ist es auf diese Weise möglich, auf einen durch die Rückstelleinrichtung bzw. den Widerstand fließenden Strom zu reagieren, dessen Größe einem insbesondere durch die Dimensionierung des Widerstands vorgebbaren Schwellenwert entspricht, und ein entsprechendes Rückstellsignal an das Steuerorgan zu übermitteln.

Gemäß einer weiteren bevorzugten Ausführungsform der Erfindung ist vorgesehen, daß die Rückstelleinrichtung in Abstimmung mit einem vorgebbaren maximalen Stromverbrauch von an den Geräteanschluß angeschlossenen Verbrauchern dimensioniert ist.

Hierdurch wird eine einfache Möglichkeit geschaffen, einen begrenzten Stromverbrauch am Geräteanschluß auch während des Trennzustands des Relais zuzulassen. Verbraucher mit einem entsprechend geringen Stromverbrauch können somit weiterbetrieben werden. Besonders vorteilhaft ist, daß eine maximal zulässige Last einfach durch die entsprechende Dimensionierung der Rückstelleinrichtung bzw. des Widerstands vorgenommen werden kann. Insbesondere können dadurch die Fahrzeughersteller selbst auf einfache Weise eine jeweils zulässige Maximallast einstellen.

Eine alternative Möglichkeit, das Haltesignal und das Relais aufeinander abzustimmen, besteht gemäß einer alternativen Ausführungsform der Erfindung darin, ein pulsbreitenmoduliertes Haltesignal vorzusehen, wobei insbesondere das Relais für die maximale Signalhöhe des pulsbreitenmodulierten Haltesignals ausgelegt und im zeitlichen Mittel die Signalhöhe dieses pulsbreitenmodulierten Haltesignals abgesenkt ist und/oder das Relais für die nominelle Arbeitsspannung der Batterie oder eines die Batterie enthaltenden elektrischen Netzes ausgelegt ist. Dabei ist also bevorzugt das Relais für die nominelle Arbeitsspannung der Batterie oder eines die Batterie enthaltenden elektrischen Netzes ausgelegt. Auf diese Weise wird im zeitlichen Mittel die Signalhöhe des Haltesignals abgesenkt und somit ebenfalls der Umstand genutzt, daß die zur Aufrechterhaltung des Trennzustands des Relais erforderliche Haltespannung niedriger ist als die zur Herstellung des Trennzustands benötigte Schaltspannung.

Obwohl beide Varianten mit jeweils vergleichsweise geringem Aufwand zu einer Minimierung des Stromverbrauchs des Relais im Trennzustand führen, stellt die gezielte Überdimensionierung des Relais und insbesondere des elektrischen Widerstand einer Spule des Relais ohne Pulsbreitenmodulation des Haltesignals die bevorzugte Ausführung dar.

Weitere bevorzugte Ausführungsformen der Erfindung sind auch in den Unteransprüchen, der Beschreibung sowie der Zeichnung angegeben.

Die Erfindung wird im folgenden lediglich beispielhaft unter Bezugnahme auf die Zeichnung beschrieben. Es zeigen:
- Fig. 1: einen Schaltplan zur Erläuterung einer Entladeschutzvorrichtung gemäß einer Ausführungsform der Erfindung, und
- Fig. 2: einen Schaltplan einer möglichen Ausführung einer in Verbindung mit der Schutzvorrichtung gemäß Fig. 1 einsetzbaren Verstärkereinheit.

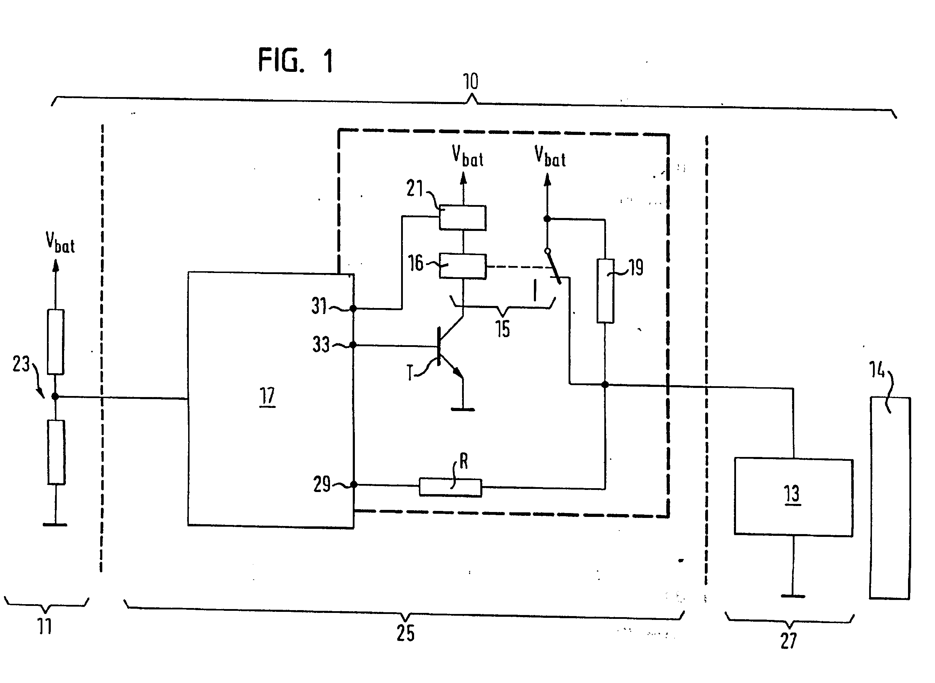

In Fig. 1 ist schematisch die elektrische Einrichtung eines Kraftfahrzeugs 10 angedeutet, die eine Batterie 11, einen beispielsweise in der Fahrgastzelle 27 des Fahrzeugs 10 angeordneten Geräteanschluß 13 und eine Steuereinheit 25 zwischen der Batterie 11 und dem Geräteanschluß 13 umfaßt.

Die eine Batteriespannung V_{bat} liefernde Fahrzeugbatterie 11 ist mit einer in Fig. 1 lediglich angedeuteten Meßeinrichtung 23 versehen, die für ein Steuerorgan 17 der Steuereinheit 25 einen der momentanen Batteriespannung entsprechenden Meßwert zur Verfügung stellt.

Bei dem mit der Meßeinheit 23 kommunizierenden Steuerorgan 17 handelt es sich um einen Mikrocontroller zur Ansteuerung einer Verstärkereinheit 21 sowie eines Schaltorgans 15 in Form eines Relais.

Mit der gestrichelten Linie ist in Fig. 1 der Bereich der erfindungsgemäßen Steuereinheit 25 angedeutet, mit dem durch die Erfindung ein bei bekannten Lösungen vorgesehenes bistabiles Kipprelais ersetzt wird.

Bei dem Schaltorgan 15 handelt es sich um ein im Handel erhältliches Standardbauteil in Form eines elektromagnetischen, monostabilen Relais. Das Relais 15 ist im dargestellten Normalzustand, d.h. bei nicht erregter Relaisspule 16 geschlossen. Im Normalzustand besteht somit eine elektrische Verbindung zwischen der Batterie 11 und dem Geräteanschluß 13. Externe Geräte wie beispielsweise Staubsauger, Mobiltelefone, Kühlgeräte und andere elektrische Verbraucher 14 können somit auch bei ausgeschaltetem Fahrzeugmotor über die Fahrzeugbatterie 11 betrieben werden.

Parallel zum Relais 15 ist zwischen die Batterie 11 und den Geräteanschluß 13 ein elektrischer Widerstand 19 geschaltet, der als Rückstelleinrichtung dient und über einen weiteren Widerstand R mit einem Aufweckanschluß 29 des Mikrocontrollers 17 verbunden ist.

Die Verstärkereinheit 21 ist mit einem Schaltanschluß 31 des Mikrocontrollers 17 verbunden, über den ein pulsbreitenmoduliertes Schaltsignal an die Verstärkereinheit 21 übermittelt werden kann. Mit einem weiteren Schaltanschluß 33 des Mikrocontrollers 17 steht das Relais 15 über einen Transistor T in Verbindung, wobei das Relais 15 an den Kollektor und der Mikrocontroller 17 an die Basis des Transistors T angeschlossen ist.

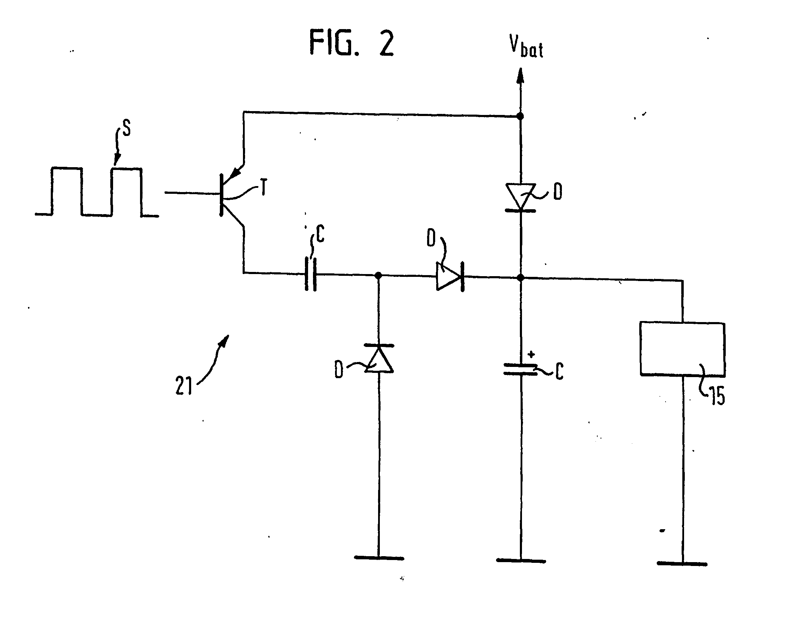

Fig. 2 zeigt eine mögliche Verstärkerschaltung, die zur Verstärkung eines vom Mikrocontroller 17 (vgl. Fig. 1) erzeugten, pulsbreitenmodulierten Signals S verwendet werden kann. Das Schaltsignal S wird an die Basis eines Transistors T angelegt, der zusammen mit Kondensatoren C und Dioden D die wesentlichen Bauteile dieses Spannungsverstärkers bildet. Die Versorgung des Spannungsverstärkers erfolgt über die Fahrzeugbatterie 11 (vgl. Fig. 1) und insbesondere über den auch als "Terminal 30" bezeichneten Batterieanschluß. Mit dem verstärkten Schaltsignal S wird das in Fig. 2 lediglich schematisch angedeutete Relais 15 beaufschlagt, um ausgehend vom Normalzustand gemäß Fig. 1 in einen Trennzustand überführt zu werden, in dem die elektrische Verbindung zum Geräteanschluß 13 unterbrochen ist.

Erfindungsgemäß ist das Relais 15 bezogen auf die nominelle Arbeitsspannung der Batterie 11, die insbesondere 12 V beträgt, gezielt derart überdimensioniert, daß die Relaisspule 16 einen höheren elektrischen Widerstand aufweist als die Spule eines für ein 12 V-Netz ausgelegtes Relais. In einem bevorzugten Ausführungsbeispiel der Erfindung wird ein standardmäßiges 24 V-Relais verwendet.

Wenn bei geschlossenem Relais 15 gemäß Fig. 1 und an den Geräteanschluß 13 angeschlossenem Verbraucher 14 die Fahrzeugbatterie 11 bei ausgeschaltetem Fahrzeugmotor nicht geladen wird, dann nimmt die Batteriespannung ab, bis sie einen im Mikrocontroller 17 gespeicherten, vorgebbaren Mindestspannungswert erreicht. Das Erreichen dieses Schwellenwertes wird mittels der Meßeinheit 23 vom Mikrocontroller 17 detektiert, der daraufhin das pulsbreitenmodulierte Schaltsignal S erzeugt und über den Schaltanschluß 31 an den Spannungsverstärker 21 übermittelt.

Der Spannungsverstärker 21 ist derart ausgelegt, daß das verstärkte Schaltsignal S in der Lage ist, am Relais 15 einen Schaltvorgang auszulösen und durch Erregen der Spule 16 das Relais 15 in einen Trennzustand zu überführen, in dem die elektrische Verbindung zwischen der Batterie 11 und dem Geräteanschluß 13 unterbrochen ist. Durch die Erzeugung des Schaltsignal S als Antwort auf das Erreichen der Batteriemindestspannung wird somit ein an den Geräteanschluß 13 angeschlossener Verbraucher 14 von der Batterie 11 elektrisch getrennt, um einen kritischen Entladezustand der Batterie 11 zu vermeiden.

Da die zum Aufrechterhalten des Trennzustands des Relais 15 benötigte Haltespannung kleiner ist als die zur Herstellung des Trennzustands erforderliche Schaltspannung, wird das Schaltsignal S lediglich für die Dauer des Schaltvorgangs erzeugt. Die nach dem Aussenden des pulsbreitenmodulierten Schaltsignals S am Relais 15 anliegende Normalspannung reicht aus, um die Relaisspule 16 weiterhin derart zu erregen, daß der Trennzustand des Relais 15 aufrechterhalten wird.

Durch die erfindungsgemäß gezielte Überdimensionierung des Relais 15 bezogen auf die nominelle Arbeitsspannung der Batterie 11 und somit die Signalhöhe des im Trennzustand an der Relaisspule 16 anliegenden Haltesignals und durch den im Vergleich zu einem normal ausgelegten Relais hohen elektrischen Widerstand der Relaisspule 16 ist der über das Relais 15 fließende Strom minimal. Erfindungsgemäß wird daher durch die Überdimensionierung des Relais 15 dessen Stromverbrauch soweit minimiert, daß die aktive Aufrechterhaltung des Trennzustands des Relais 15 für die bereits zum Teil entladene Batterie 11 unkritisch ist.

Während des Trennzustands kann an den Geräteanschluß 13 über den parallel geschalteten Widerstand 19 ein elektrischer Strom fließen. Folglich kann durch entsprechende Dimensionierung des Widerstands 19 für an den Geräteanschluß 13 angeschlossene Verbraucher 14 ein maximaler Stromverbrauch vorgegeben werden, so daß Verbraucher 14, deren Stromverbrauch den vorgegebenen Wert nicht übersteigt, auch während des Trennzustands über die Fahrzeugbatterie 11 betrieben werden können.

Der Widerstand 19 dient außerdem als Rückstelleinrichtung, indem er dafür sorgt, daß beim Abtrennen des Verbrauchers 14 vom Geräteanschluß 13 oder bei Erreichen eines vorgegebenen Stromwertes über den weiteren Widerstand R ein Signal auf den Aufweckanschluß 29 des Mikrocontrollers 17 gegeben wird. Als Antwort auf dieses Aufwecksignal wird die Relaisspule 16 mittels des Mikrocontrollers 17 aberregt, so daß der Trennzustand aufgehoben und das Relais 15 wieder geschlossen wird. Auf diese Weise wird erreicht, daß bei abgetrenntem Verbraucher 14, d.h. wenn keine Gefahr einer weitergehenden Entladung der Batterie 11 mehr besteht und somit kein Schutz mehr erforderlich ist, auch der Stromverbrauch durch die Relaisspule 16 automatisch beendet wird.

Mittels des Widerstands 19 wird folglich durch Abtrennen des Verbrauchers 14 die Anordnung automatisch in einen Zustand überführt, in welchem nicht unnötig Strom verbraucht wird.

Mittels des Mikrocontrollers 17 kann zusätzlich dafür gesorgt werden, daß bei Erreichen der vorgegebenen Mindestbatteriespannung nicht nur das Relais 15 angesteuert, sondern außerdem ein Warnsignal erzeugt wird, das zur Ansteuerung einer optischen oder akustischen Warnanzeige z.B. an der Armaturentafel oder über die Hupe des Fahrzeugs benutzt werden kann, um den Fahrer von dem Teilentladezustand der Batterie 11 in Kenntnis zu setzen.

### Bezugszeichenliste

- 10: Fahrzeug
- 11: Batterie
- 13: Geräteanschluß
- 14: Verbraucher
- 15: Schaltorgan, Relais
- 16: Spule des Relais
- 17: Steuerorgan, Mikrocontroller
- 19: Rückstelleinrichtung, Widerstand
- 21: Verstärkereinheit
- 23: Meßeinheit
- 25: Steuereinheit
- 27: Fahrgastzelle
- 29: Aufweckanschluß
- 31: Schaltanschluß
- 33: Schaltanschluß

- S: Schaltsignal
- T: Transistor
- C: Kondensator
- D: Diode
- R: Widerstand

## Patentansprüche

1. Entladeschutzvorrichtung für Batterien (11), insbesondere Kraftfahrzeugbatterien, die in einem Normalzustand mit wenigstens einem Geräteanschluss (13) elektrisch verbunden sind, mit wenigstens einem Schaltorgan (15) zwischen der Batterie (11) und dem Geräteanschluss (13), das zur Unterbrechung einer in dem Normalzustand bestehenden elektrischen Verbindung zwischen der Batterie (11) und dem Geräteanschluß (13) durch ein Schaltsignal (S) in einen Trennzustand überführbar ist, und mit einem Steuerorgan (17) zur Erzeugung des Schaltsignals (S)
**dadurch gekennzeichnet,**
**dass** das Steuerorgan (17) das Schaltsignal (S) bei Erreichen oder Unterschreiten einer vorgebbaren Mindestspannung der Batterie (11) erzeugt, dass als Schaltorgan ein zum Aufrechterhalten des Trennzustands mit einem Haltesignal dauerbeaufschlagtes Relais (15) vorgesehen ist und dass das Haltesignal und das Relais (15) derart aufeinander abgestimmt sind, dass das Relais (15) bezogen auf die Signalhöhe des Haltesignals zumindest im zeitlichen Mittel überdimensioniert ist.

2. Vorrichtung nach Anspruch 1,
**dadurch gekennzeichnet,**
**daß** das Relais (15) bezogen auf die nominelle Arbeitsspannung der Batterie (11) oder eines die Batterie (11) enthaltenden elektrischen Netzes überdimensioniert ist.

3. Vorrichtung nach Anspruch 1 oder 2,
**dadurch gekennzeichnet,**
**daß** das Relais (15), insbesondere eine Spule (16) des Relais (15), einen höheren elektrischen Widerstand aufweist als ein für die nominelle Arbeitsspannung der Batterie (11) oder eines die Batterie (11) enthaltenden elektrischen Netzes ausgelegtes Relais.

4. Vorrichtung nach einem der vorhergehenden Ansprüche,
**dadurch gekennzeichnet,**
**daß** zur Verstärkung des von dem Steuerorgan (17) erzeugten Schaltsignals (S) dem Relais (15) eine Verstärkereinheit (21) vorgeschaltet ist.

5. Vorrichtung nach einem der vorhergehenden Ansprüche,
**dadurch gekennzeichnet,**
**daß** die nominelle Arbeitsspannung etwa 12 V beträgt und das Relais (15), insbesondere eine Spule (16) des Relais (15), für eine nominelle Arbeitsspannung von etwa 24 V ausgelegt ist.

6. Vorrichtung nach einem der vorhergehenden Ansprüche,
**dadurch gekennzeichnet,**
**daß** zur Aufhebung des Trennzustandes des Relais (15) eine automatische Rückstelleinrichtung (19) vorgesehen ist, die vorzugsweise zur Kommunikation mit dem Steuerorgan (17) ausgebildet ist.

7. Vorrichtung nach Anspruch 6,
**dadurch gekennzeichnet,**
**daß** die Rückstelleinrichtung (19) zur Übermittlung eines Rückstellsignals an das Steuerorgan (17) in Abhängigkeit von vorgebbaren Bedingungen am Geräteanschluß (13) ausgebildet ist.

8. Vorrichtung nach Anspruch 6 oder 7,
**dadurch gekennzeichnet,**
**daß** die Rückstelleinrichtung (19) zum Nachweis einer Unterbrechung der elektrischen Verbindung zwischen dem Geräteanschluß (13) und einem Verbraucher (14) ausgebildet ist.

9. Vorrichtung nach einem der Ansprüche 6 bis 8,
**dadurch gekennzeichnet,**
**daß** die Rückstelleinrichtung (19) zum Nachweis eines durch die Rückstelleinrichtung (19) fließenden elektrischen Stromes mit einer einem vorgebbaren Schwellenwert entsprechenden Größe ausgebildet ist.

10. Vorrichtung nach einem der Ansprüche 6 bis 9,
**dadurch gekennzeichnet,**
**daß** die Rückstelleinrichtung (19) parallel zum Relais (15) zwischen die Batterie (11) und den Geräteanschluß (13) geschaltet ist.

11. Vorrichtung nach einem der Ansprüche 6 bis 10,
**dadurch gekennzeichnet,**
**daß** die Rückstelleinrichtung (19) von zumindest einem elektrischen Widerstand gebildet ist.

12. Vorrichtung nach einem der Ansprüche 6 bis 11,
**dadurch gekennzeichnet,**
**daß** die Rückstelleinrichtung (19) in Abstimmung mit einem vorgebbaren maximalen Stromverbrauch von an den Geräteanschluß (13) angeschlossenen Verbrauchern (14) dimensioniert ist.

13. Vorrichtung nach einem der vorhergehenden Ansprüche,
**dadurch gekennzeichnet,**
**daß** das Schaltsignal (S) pulsbreitenmoduliert ist.

14. Vorrichtung nach einem der vorhergehenden Ansprüche,
**dadurch gekennzeichnet,**
**daß** das Steuerorgan (17) einen Mikrocontroller umfaßt, in dem die Mindestspannung der Batterie (11) gespeichert ist, der zur Erzeugung eines insbesondere pulsbreitenmodulierten Schaltsignals (S) ausgebildet ist und mit dem als Antwort auf ein Rückstellsignal einer Rückstelleinrichtung (19) der Trennzustand des Relais (15) aufhebbar ist.

15. Vorrichtung nach einem der vorhergehenden Ansprüche,
**dadurch gekennzeichnet,**
**dass** das Haltesignal pulsbreitenmoduliert ist, wobei insbesondere das Relais (15) für die maximale Signalhöhe des pulsbreitenmodulierten Haltesignals ausgelegt und im zeitlichen Mittel die Signalhöhe dieses pulsbreitenmodulierten Haltesignals abgesenkt ist und/oder das Relais (15) für die nominelle Arbeitsspannung der Batterie (11) oder eines die Batterie (11) enthaltenden elektrischen Netzes ausgelegt ist.

## Claims

1. A discharge protection apparatus for batteries (11), in particular motor vehicle batteries, which are electrically connected to at least one apparatus connection (13) in a normal state, having at least one switch member (15) between the battery (11) and the apparatus connection (13) which can be changed into a cut-off state by a switching signal (S) in order to interrupt an electrical connection, which is present in the normal state between the battery (11) and the apparatus connection (13), and having a control unit (17) to generate the switching signal (S),
**characterized in that**
the control unit (17) generates the switching signal (S) when a pre-settable minimum voltage of the battery (11) is reached or is fallen short of; **in that** a relay (15) permanently controlled by a holding signal to maintain the cut-off state is provided as the switch member; and **in that** the holding signal and the relay (15) are matched to one another such that the relay (15) is over-dimensioned with respect to the signal level of the holding signal, at least in time average.

2. An apparatus in accordance with claim 1, **characterized in that** the relay (15) is over-dimensioned with respect to the nominal operating voltage of the battery (11) or of an electrical network containing the battery (11).

3. An apparatus in accordance with claim 1 or claim 2, **characterized in that** the relay (15), in particular a coil (16) of the relay (15), has a higher electrical resistance than a relay designed for the nominal operating voltage of the battery (11) or of an electrical network containing the battery (11).

4. An apparatus in accordance with any one of the preceding claims, **characterized in that** a booster unit (21) is connected before the relay (15) for the boosting of the switching signal (S) generated by the control unit (17).

5. An apparatus in accordance with any one of the preceding claims, **characterized in that** the nominal operating voltage is around 12 V and **in that** the relay (15), in particular a coil (16) of the relay (15), is designed for a nominal operating voltage of approximately 24 V.

6. An apparatus in accordance with any one of the preceding claims, **characterized in that** an automatic resetting device (19) is provided for the cancellation of the cut-off state of the relay (15) which is preferably formed for communication with the control unit (17).

7. An apparatus in accordance with claim 6, **characterized in that** the resetting device (19) for the transmitting of a reset signal to the control unit (17) is formed in dependence on pre-settable conditions at the apparatus connection (13).

8. An apparatus in accordance with claim 6 or claim 7, **characterized in that** the resetting device (19) is formed for the detection of an interruption of the electrical connection between the apparatus connection (13) and a consumer (14).

9. An apparatus in accordance with any one of the claims 6 to 8, **characterized in that** the resetting device (19) is formed for the detection of an electrical current flowing through the resetting device (19) and having a magnitude corresponding to a pre-settable threshold value.

10. An apparatus in accordance with any one of the claims 6 to 9, **characterized in that** the resetting device (19) is connected in parallel to the relay (15) between the battery (11) and the apparatus connection (13).

11. An apparatus in accordance with any one of the claims 6 to 10, **characterized in that** the resetting device (19) is formed by at least one electrical resistor.

12. An apparatus in accordance with any one of the claims 6 to 11, **characterized in that** the resetting device (19) is dimensioned in agreement with a pre-settable maximum power consumption of consumers (14) connected to the apparatus connection (13).

13. An apparatus in accordance with any one of the preceding claims, **characterized in that** the switching signal (S) is pulse width modulated.

14. An apparatus in accordance with any one of the preceding claims, **characterized in that** the control unit (17) comprises a microcontroller in which the minimum voltage of the battery (11) is stored, which is formed for the generation of a switching signal (S), in particular a pulse width modulated switching signal (S), and with which the cut-off state of the relay (15) can be cancelled as a response to a reset signal of a resetting device (19).

15. An apparatus in accordance with any one of the preceding claims, **characterized in that** the holding signal is pulse width modulated, with in particular the relay (15) being designed for the maximum signal level of the pulse width modulated holding signal and the signal level of this pulse width modulated holding signal being lowered in time average and/or the relay (15) being designed for the nominal operating voltage of the battery (11) or of an electrical network including the battery (11).

## Revendications

1. Dispositif de protection de décharge pour batteries (11), en particulier batteries de véhicule automobile, qui dans un état normal sont reliées électriquement à au moins une borne d'appareil (13), avec au moins un organe de commutation (15) entre la batterie (11) et la borne d'appareil (13), qui, pour interrompre une liaison électrique existant à l'état normal entre la batterie (11) et la borne d'appareil (13), peut passer dans un état de séparation, par un signal de commutation (S), et avec un organe de commande (17) pour produire le signal de commutation (S),
**caractérisé**
**en ce que** l'organe de commande (17) produit le signal de commutation (S) lorsqu'est atteinte ou dépassée une tension minimale à prédéfinir de la batterie (11), en ce qu'il est prévu comme organe de commutation un relais (15) recevant en permanence un signal de maintien pour maintenir l'état de séparation, et en ce que le signal de maintien et le relais (15) sont accordés l'un à l'autre de manière que le relais (15) soit surdimensionné, au moins en moyenne dans le temps, par rapport à la hauteur du signal de maintien.

2. Dispositif selon la revendication 1,
**caractérisé**
**en ce que** le relais (15) est surdimensionné par rapport à la tension de travail nominale de la batterie (11) ou d'un réseau électrique contenant la batterie (11).

3. Dispositif selon la revendication 1 ou 2,
**caractérisé**
**en ce que** le relais (15), en particulier une bobine (16) du relais (15), présente une résistance électrique supérieure à celle d'un relais dimensionné pour la tension de travail nominale de la batterie (11) ou d'un réseau électrique contenant la batterie (11).

4. Dispositif selon l'une quelconque des revendications précédentes,
**caractérisé**
**en ce qu'**une unité d'amplification (24) est couplée en amont du relais (15) pour amplifier le signal de commutation (S) produit par l'organe de commande (17).

5. Dispositif selon l'une quelconque des revendications précédentes,
**caractérisé**
**en ce que** la tension de travail nominale est d'environ 12 V et le relais (15), en particulier une bobine (16) du relais (15), est dimensionné pour une tension de travail nominale d'environ 24 V.

6. Dispositif selon l'une quelconque des revendications précédentes,
**caractérisé**
**en ce que**, pour supprimer l'état de séparation du relais (15), il est prévu un dispositif de rappel automatique (19) qui est conçu de préférence pour la communication avec l'organe de commande (17).

7. Dispositif selon la revendication 6,
**caractérisé**
**en ce que** le dispositif de rappel (19) est conçu pour transmettre un signal de rappel à l'organe de commande (17), en fonction de conditions à prédéfinir sur la borne d'appareil (13).

8. Dispositif selon la revendication 6 ou 7,
**caractérisé**
**en ce que** le dispositif de rappel (19) est conçu pour attester une interruption de la liaison électrique entre la borne d'appareil (13) et un récepteur (14).

9. Dispositif selon l'une quelconque des revendications 6 à 8,
**caractérisé**
**en ce que** le dispositif de rappel (19) est conçu pour attester un courant électrique, circulant à travers le dispositif de rappel (19), avec une valeur correspondant à une valeur de seuil à prédéfinir.

10. Dispositif selon l'une quelconque des revendications 6 à 9,
**caractérisé**
**en ce que** le dispositif de rappel (19) est couplé en parallèle au relais (15) entre la batterie (11) et la borne d'appareil (13).

11. Dispositif selon l'une quelconque des revendications 6 à 10,
**caractérisé**
**en ce que** le dispositif de rappel (19) est formé par au moins une résistance électrique.

12. Dispositif selon l'une quelconque des revendications 6 à 11,
**caractérisé**
**en ce que** le dispositif de rappel (19) est dimensionné en accord avec une consommation de courant maximale à prédéfinir de récepteurs (14) connectés à la borne d'appareil (13).

13. Dispositif selon l'une quelconque des revendications précédentes,
**caractérisé**
**en ce que** le signal de commutation (S) est modulé en largeur d'impulsion.

14. Dispositif selon l'une quelconque des revendications précédentes,
**caractérisé**
**en ce que** l'organe de commande (17) comprend un microcontrôleur dans lequel est mémorisée la tension minimale de la batterie (11) et qui est conçu pour produire un signal de commutation (S) notamment modulé en largeur d'impulsion, et par lequel l'état de séparation du relais (15) peut être supprimé, en réponse à un signal de rappel d'un dispositif de rappel (19).

15. Dispositif selon l'une quelconque des revendications précédentes,
**caractérisé**
**en ce que** le signal de maintien est modulé en largeur d'impulsion, le relais (15) étant dimensionné en particulier pour la hauteur maximale du signal de maintien modulé en largeur d'impulsion et, en moyenne dans le temps, la hauteur de ce signal de maintien modulé en largeur d'impulsion est abaissée et/ou le relais (15) est dimensionné pour la tension de travail nominale de la batterie (11) ou d'un réseau électrique contenant la batterie (11).
